Europäisches Patentamt

European Patent Office

Office européen des brevets

(19)

(11) **EP 1 207 187 B1**

(12) **EUROPÄISCHE PATENTSCHRIFT**

(45) Veröffentlichungstag und Bekanntmachung des Hinweises auf die Patenterteilung:
**23.11.2005 Patentblatt 2005/47**

(51) Int Cl.⁷: $C09D\ 5/44$, C09D 163/00

(21) Anmeldenummer: **01125469.5**

(22) Anmeldetag: **06.11.2001**

(54) **Wässrige Bindemittel auf Basis von Epoxidharzen**

Aqueous binder based on Epoxy Resins

Compositions Aqueuses de Liants basées sur des Résines Epoxy

(84) Benannte Vertragsstaaten:
**AT DE FR IT**

(30) Priorität: **15.11.2000 AT 19282000**

(43) Veröffentlichungstag der Anmeldung:
**22.05.2002 Patentblatt 2002/21**

(73) Patentinhaber: **Cytec Surface Specialties Austria GmbH**
**8402 Werndorf (AT)**

(72) Erfinder:
• **Paar, Willibald, Dr.**
**8010 Graz (AT)**

• **Feola, Roland, Dr.**
**8045 Graz (AT)**
• **Gmoser, Johann**
**8045 Graz (AT)**
• **Friedl, Maximilian,**
**8101 Gratkorn (AT)**

(74) Vertreter: **Deckers, Hellmuth Alexander**
**European Patent Attorney,**
**Bahnhofstrasse 26/A**
**55218 Ingelheim (DE)**

(56) Entgegenhaltungen:
EP-A- 0 012 463     DE-C- 19 711 398
US-A- 4 370 453

## Beschreibung

Epoxidharze, insbesondere die üblicherweise kommerziell verwendeten auf Basis von Bisphenol A, sind in nicht modifizierter Form in Wasser unlöslich oder sehr schwer löslich. Grundsätzlich kann man durch Umsetzung von Epoxidharzen mit Aminen und anschließender Protonierung der basischen Gruppen wasserverdünnbare, kationisch stabilisierte Harze erhalten. Ebenso ist es möglich, durch Modifikation des Epoxidharzes mit nichtionischen hydrophilen Gruppen oder mit anionischen Gruppen eine begrenzte Löslichkeit zu erreichen, die ausreicht, um einer Dispersion des betreffenden modifizierten Epoxidharzes in Wasser eine ausreichende Stabilität zu verleihen. Solche Dispersionen sind mit (weiterem) Wasser verdünnbar. Unter "wasserverdünnbar" wird hier verstanden, daß eine Dispersion in Wasser sich nicht spontan entmischt und auch bei Lagerung bei Raumtemperatur (23 °C) während mindestens 7 Tagen keine makroskopische Entmischung auftritt. Das modifizierte Epoxidharz kann dann aus der wäßrigen Dispersion verarbeitet werden, nach Entfernen des Wasseranteiles durch Verdunstung oder Eindringen in das Substrat verbleibt das Harz auf der Oberfläche und bildet bei zweckmäßiger Zusammensetzung der dispersen Phase einen koaleszierten Film, der durch Zusatz von geeigneten Härtern chemisch vernetzt werden kann. Da die kationischen Epoxid-Amin-Addukte naturgemäß aus der Ringöffnung der Epoxidgruppen sekundäre Hydroxylfunktionen aufweisen, eignen sich als Härter Verbindungen, die mit Hydroxygruppen unter Addition oder Kondensation reagieren, sowie auch derartige Oligomere und Polymere, wie z.B. Melaminharze, Phenolharze und (blockierte) mehrfunktionelle Isocyanate.

Zur Erzielung der Wasserverdünnbarkeit bei den kationisch modifizierten Epoxidharzen werden die basischen Gruppen der Epoxid-Amin-Addukte mit Säuren, wie z.B. Ameisensäure, Essigsäure oder Milchsäure teilweise (zu mehr als 5 %) oder vollständig neutralisiert, d.i. in die Salzform überführt. Dabei ist der Gehalt an basischen Aminogruppen im Epoxid-Amin-Addukt (beispielsweise gemessen über die Aminzahl, s.u.) und der Grad von deren Neutralisation (also Anteil an kationischen Gruppen) maßgeblich für das Ausmaß der Wasserverdünnbarkeit.

Derartige, kationisch stabilisierte Epoxid-Amin-Addukte zählen zum Stand der Technik und wurden in der Patentliteratur schon vielfach beschrieben. Vor allem auf dem Gebiet der kataphoretischen Elektrotauchlackierung werden sie in Kombination mit blockierten di- oder oligofunktionellen Isocyanaten als Härter-Komponente erfolgreich eingesetzt (siehe z.B. EP-A 0 249 850, EP-A 0 004 090, DE-A 30 41 700, DE-A 33 00 583, DE-A 33 11 513). Gegebenenfalls werden sie anschließend noch weiter mit Vernetzungskatalysatoren, Pigmenten, Füllstoffen und anderen Zusatzstoffen zu pigmentierten Lacken verarbeitet.

Es wurde nun gefunden, daß bestimmte wasserverdünnbare Epoxidharze, die durch eine Aufbaureaktion aus kationischen oder kationogenen mehrfunktionellen Vorprodukten mit Di- oder Polyepoxiden zugänglich sind, ohne zusätzliche Härter zu Beschichtungen führen, die gute Haftung auf Metallen und mineralischen Untergründen aufweisen und einen ausgezeichneten Korrosionsschutz bieten.

Als "kationogen" werden solche Verbindungen bezeichnet, die bei Zusatz von Säuren in Gegenwart von Wasser Kationen bilden können.

Gegenstand der vorliegenden Erfindung sind daher wasserverdünnbare kationisch stabilisierte Epoxidharze **ZYWX,** enthaltend Strukturbausteine abgeleitet von ungesättigten Carbonsäuren **W**, aromatischen oder aliphatischen Epoxidverbindungen **Z** mit mindestens einer Epoxidgruppe pro Molekül, aliphatischen Aminen **Y,** die mindestens eine primäre oder sekundäre Aminogruppe aufweisen, und Epoxidharzen **X** mit mindestens zwei Epoxidgruppen pro Molekül, wobei die Mengen des Epoxidharzes **X,** des Epoxidharzes **Z,** der Carbonsäure **W** und des Amins **Y** so gewählt werden, daß die Anzahl der (bezüglich der Addition an eine Epoxidgruppe) reaktiven Hydroxyl-und/oder Amino-Gruppen des aus7, **W** und **Y** gebildeten Eposid-Amin-Carbonsäure-Addukts **ZYW** mindestens gleich der der Epoxidgruppen in **X** ist. Bevorzugt werden als Komponente **Y** Mischungen von Aminen **Y1** mit mindestens einer primären Aminogruppe und gegebenenfalls einer oder mehreren tertiären Aminogruppen und Aminen **Y2**, die frei sind von primären und bevorzugt auch von tertiären Aminogruppen, mit mindestens einer sekundären Aminogruppe und gegebenenfalls einer oder mehreren Hydroxylgruppen eingesetzt. Es ist ebenfalls möglich, das Epoxidharz **Z** zunächst mit einem Amin **Y2** und anschließend mit einem Amin **Y1** umzusetzen. Das Epoxid-Amin-Carbonsäure-Addukt **ZYW** weist mindestens eine, bevorzugt mindestens zwei sekundäre Hydroxylgruppen und mindestens eine, bevorzugt mindestens zwei sekundäre oder tertiäre Aminogruppen auf.

Das Epoxid-Amin-Carbonsäure-Addukt **ZYW** wird dann durch Säurezusatz zumindest teilweise (mindestens 5 % der basischen Aminogruppen werden in kationische Gruppen umgewandelt) neutralisiert und anschließend durch Zusatz von Wasser unter Rühren in eine wäßrige Dispersion überführt. Diese Dispersion hat bevorzugt einen Festkörper-Massenanteil von 20 bis 60, insbesondere 25 bis 50 %. Zu dieser Dispersion, die dazu vorzugsweise auf eine Temperatur von mindestens 40 °C, bevorzugt 50 bis 90 °C, erwärmt wird, wird ein Epoxidharz **X** mit mindestens zwei Epoxidgruppen pro Molekül zugegeben, wobei die Mengen des Epoxidharzes **X** und des Epoxid-Amin-Carbonsäure-Addukts **ZYW** so gewählt werden, daß die Anzahl der (bezüglich der Addition an eine Epoxidgruppe) reaktiven Hydroxyl- und/ oder Amino-Gruppen in **ZYW** mindestens gleich der der Epoxidgruppen in **X** ist; bevorzugt ist die Anzahl dieser Hydroxyl-und/oder Aminogruppen in **ZYW** mindestens 10 % größer als die der Epoxidgruppen in **X**. Zur Reaktion von **X** und **ZYW** wird solange bei einer Temperatur von 70 bis 99 °C, bevorzugt von 75 bis 98 °C gehalten, bis keine Epoxidgruppen in der Reaktionsmischung mehr nachweisbar sind.

Die Epoxidharze **Z** haben mindestens eine, bevorzugt zwei 1,2-Epoxygruppen und sind aliphatisch oder aromatisch. Als Monoepoxide lassen sich Glycidyläther von einwertigen aliphatischen oder aliphatisch-aromatischen Alkoholen einsetzen, bevorzugt werden die Glycidyläther von 2-Äthylhexanol, Decanol, Tridecylalkohol, Stearylalkohol und Benzylalkohol. Ebenfalls einsetzen lassen sich Glycidylester von aliphatischen oder aromatischen Monocarbonsäuren wie Glycidylneopentanoat, Glycidyloctoat, Glycidylneodecanoat sowie insbesondere die kommerziell erhältlichen Mischungen von Glycidylestern von verzweigten aliphatischen Monocarbonsäuren mit 9 bis 11 Kohlenstoffatomen. Selbstverständlich sind auch Mischungen der genannten Glycidyläther und -ester geeignet. Aliphatische Diepoxide sind beispielsweise zugänglich durch Epoxidation von Diolefinen wie 1,3-Butadien oder 1,5-Hexadien, oder durch Umsetzen von Epichlorhydrin mit Dihydroxyverbindungen wie 1,4-Butandiol, 1,6-Hexandiol oder den oligomeren Äthylen- oder Propylenglykolen. Aromatische Diepoxide sind zugänglich durch Umsetzen von Dihydroxyaromaten wie Resorcin, Diydroxydiphenyl, Dihydroxydiphenylsulfon oder Dihydroxybenzophenon mit Epichlorhydrin. Besonders bevorzugt sind die Umsetzungsprodukte von Epichlorhydrin mit 2,2-Bis(4-hydroxyphenyl)propan oder Bis(4-hydroxyphenyl) methan (Bisphenol A und Bisphenol F). Zusätzlich zu den genannten Diepoxiden lassen sich auch die Glycidyläther von drei- oder mehrwertigen Alkoholen wie Trimethyloläthan und -propan, Pentaerythrit, Ditrimethylolpropan und Dipentaerythrit sowie den Äthoxylierungs- und Propoxylierungsprodukten der genannten Alkohole einsetzen, wobei im Mittel mindestens zwei und maximal zwanzig Äthylenoxy- bzw. Propylenoxygruppen für jede der Hydroxylgruppen der genannten Alkohole bevorzugt werden. Ebenfalls geeignet sind Glycidylester von zwei- oder mehrwertigen organischen Säuren, insbesondere von Carbonsäuren wie Bernsteinsäure, Adipinsäure, Phthalsäure, Iso- und Terephthalsäure, Trimellith- und Trimesinsäure sowie Benzophenontetracarbonsäure. Bevorzugt ist der spezifische Epoxidgruppengehalt der eingesetzten Epoxidharze **Z** 0,5 bis 8 mol/kg ("EV-Wert" 125 bis 2000 g/mol), insbesondere 1 bis 6 mol/kg ("EV-Wert" 167 bis 1000 g/mol).

Der spezifische Epoxidgruppengehalt "*SEG*" ist definiert als der Quotient der Stoffmenge an Epoxidgruppen $n(\text{EP})$ in einer zu untersuchenden Probe und der Masse $m_B$ dieser Probe (und ist damit der Kehrwert des sog. "EV-Wertes" oder des sog. "Epoxid-Äquivalentgewichts" (EEW), die in der Einheit g/mol angegeben werden); die übliche (SI-) Maßeinheit ist "mol/kg":

$$SEG = n(\text{EP}) / m_B$$

Die Amine **Y** sind aliphatische lineare verzweigte oder cyclische Amine mit 2 bis 40 Kohlenstoffatomen. Die Gruppe der Amine **Y** umfaßt die Amine **Y1** mit mindestens einer primären Aminogruppe und gegebenenfalls einer oder mehreren Aminogruppen, die nicht primär sind, und die Amine **Y2** mit mindestens einer sekundären Aminogruppe und gegebenenfalls einer oder mehreren Hydroxylgruppen.

Die Amine **Y1** haben mindestens eine primäre und gegebenenfalls eine oder mehrere sekundäre und/oder tertiäre Aminogruppen. Bevorzugt werden Diamine und Tri- oder Tetramine mit zwei bzw. drei primären Aminogruppen. Als Diamine sind besonders geeignet Äthylendiamin, 1,2- und 1,3-Propylendiamin, 1,4-Diaminobutan, 1,6-Diaminohexan, Diäthylentriamin, Triäthylentetramin und die höheren oligomeren Diaminoäthylenimine, 1,2, 1,3-und 1,4-Diaminocyclohexan, Isophorondiamin und 1,3-Bis(aminomethyl)cyclohexan. Geeignet sind auch primäre Mono- und Diamine mit tertiären Aminogruppen, mit mindestens einer primären und mindestens einer tertiären Aminogruppe und 4 bis 20 Kohlenstoffatomen, wobei die Alkylreste der tertiären Aminogruppe bevorzugt ausgewählt sind aus linearen und verzweigten Alkylresten mit 1 bis 4 Kohlenstoffatomen wie Methyl-, Äthyl-, n- und iso-Propyl- sowie n-, sek.- und iso-Butyl-Resten, bevorzugt werden 3-(N,N-Dimethylamino)-propylamin, 3-(N,N-Diäthylamino)propylamin, N-(2-Aminoäthyl)morpholin und N,N'-Bis(2-aminoäthyl)piperazin sowie Triamine, z.B. Tris(2-aminoäthyl)amin. Besonders bevorzugt sind Äthylendiamin, Diäthylentriamin und 1,4-Diaminobutan sowie N,N-Dimethyl- oder N,N-Diäthylaminopropylamin.

Die Amine **Y2** haben mindestens eine sekundäre Aminogruppe, keine primären und bevorzugt keine tertiären Aminogruppen und gegebenenfalls eine oder mehrere Hydroxylgruppen. Beispiele für geeignete Amine sind Diäthanolamin, Diisopropanolamin, N-2-Hydroxyäthylpiperazin und 2-Methylaminoäthanol.

Werden Mischungen der Amine **Y1** und **Y2** eingesetzt, so ist es bevorzugt, deren Mengen so zu wählen, daß die Anzahl der aminischen Wasserstoffatome in der Komponente **Y2** zwischen 50 und 150 %, bevorzugt zwischen 75 und 125 %, der Anzahl der aminischen Wasserstoffatome in der Komponente **Y1** liegt.

Bevorzugt werden für die Neutralisation der Addukte **ZYW** organische einbasige Säuren wie Ameisensäure, Essigsäure, Milchsäure, aber auch mehrbasige Säuren wie Citronensäure oder Weinsäure eingesetzt. Es ist jedoch auch möglich, anorganische mehrbasige Säuren wie Phosphorsäure oder Borsäure sowie deren Teilester einzusetzen.

Die Epoxidharze **X** haben mindestens zwei 1,2-Epoxygruppen und sind aliphatisch oder aromatisch. Aliphatische Diepoxide sind beispielsweise zugänglich durch Epoxidation von Diolefinen wie 1,3-Butadien oder 1,5-Hexadien, oder durch Umsetzen von Epichlorhydrin mit Dihydroxyverbindungen wie 1,4-Butandiol, 1,6-Hexandiol oder den oligomeren oder polymeren Äthylen- oder Propylenglykolen. Aromatische Diepoxide sind zugänglich durch Umsetzen von Dihydroxyaromaten wie Resorcin, Diydroxydiphenyl, Dihydroxydiphenylsulfon oder Dihydroxybenzophenon mit Epichlorhydrin. Besonders bevorzugt sind die Umsetzungsprodukte von Epichlorhydrin mit 2,2-Bis(4-hydroxyphenyl) propan oder Bis(4-hydroxyphenyl)methan (Bisphenol A und Bisphenol F). Zusätzlich zu den genannten Diepoxiden lassen sich auch die Glycidyläther von drei- oder mehrwertigen Alkoholen wie Trimethyloläthan und -propan, Pentaerythrit, Ditrimethylolpropan und Dipentaerythrit sowie den Äthoxylierungs- und Propoxylierungsprodukten der genannten Alkohole einsetzen, wobei im Mittel mindestens zwei und maximal zwanzig Äthylenoxy- bzw. Propylenoxygruppen für jede der Hydroxylgruppen der genannten Alkohole bevorzugt werden. Ebenfalls geeignet sind Glycidylester von zwei- oder mehrwertigen organischen Säuren, insbesondere von Carbonsäuren wie Bernsteinsäure, Adipinsäure, Phthalsäure, Iso- und Terephthalsäure, Trimellith- und Trimesinsäure sowie Benzophenontetracarbonsäure. Bevorzugt ist der spezifische Epoxidgruppengehalt der eingesetzten Epoxidharze 0,6 bis 10 mol/kg ("EV-Wert" 100 bis 1670 g/mol), insbesondere 1,2 bis 6 mol/kg ("EV-Wert" 167 bis 840 g/mol).

Die Harze **ZYWX** weisen bevorzugt Aminzahlen von 40 bis 150 mg/g, und Hydroxylzahlen von 30 bis 150 mg/g auf, jeweils bezogen auf die Masse des Festharzes. Ihr Staudinger-Index beträgt bevorzugt zwischen 30 und 100 cm$^3$/g, gemessen in N-Methylpyrrolidon bei Raumtemperatur (23 °C).

Die früher so bezeichnete "Grenzviskositätszahl", nach DIN 1342, Teil 2.4, "Staudinger-Index" $J_g$ genannt, ist der Grenzwert der staudinger-Funktion $J_v$. bei abnehmender Konzentration und Schubspannung, wobei $J_v$, die auf die Masserikonzentration $\beta_B = m_B / V$ des gelösten Stoffes B (mit der Masse $m_B$ des Stoffes im Volumen $V$ der Lösung) bezogene relative Viskositätsänderung ist, also $J_v = (\eta_r - 1) / \beta_B$. Dabei bedeutet $\eta_r$ - 1 die relative Viskositätsänderung, gemäß $\eta_r$ - 1 = $(\eta - \eta_s) / \eta_s$. Die relative Viskosität $\eta_r$ ist der Quotient aus der Viskosität $\eta$ der untersuchten Lösung und der Viskosität $\eta_s$ des reinen Lösungsmittels. (Die physikalische Bedeutung des Staudinger-Index ist die eines spezifischen hydrodynamischen Volumens des solvatisierten Polymerknäuels bei unendlicher Verdünnung und im Ruhezustand.) Die üblicherweise für $J$ verwendete Einheit ist "cm$^3$/g"; früher häufig "dl/g".

Die Aminzahl "AZ" ist gemäß DIN 53 176 definiert als der Quotient derjenigen Masse $m_{KOH}$ an Kaliumhydroxid, die genausoviel Säure zur Neutralisation verbraucht wie eine zu untersuchende Probe, und der Masse $m_B$ dieser Probe (Masse des Feststoffes in der Probe bei Lösungen oder Dispersionen); ihre übliche Einheit ist "mg/g".

Die Hydroxylzahl "OHZ" ist gemäß DIN 53 240 definiert als der Quotient derjenigen Masse $m_{KOH}$ an Kaliumhydroxid, die genausoviel Hydroxylgruppen aufweist wie eine zu untersuchende Probe, und der Masse $m_B$ dieser Probe (Masse des Feststoffes in der Probe bei Lösungen oder Dispersionen); ihre übliche Einheit ist "mg/g".

Die erhaltenen Dispersionen der Harze **ZYWX** in Wasser weisen Festkörper-Massenanteile von ca. 20 bis ca. 60 % auf. Sie bilden nach dem Trocknen auf beliebigen Substraten, insbesondere auf metallischen Substraten wie Stahlblechen, Aluminium, verzinkten Eisenblechen, phosphatierten Eisenblechen, oder auf Kunststoffen und mineralischen Untergründen wie Beton, Putz oder Stein harte und zähe Filme, die eine gute Chemikalienbeständigkeit und Wasserbeständigkeit sowie guten Glanz aufweisen.

Die Harze **ZYWX** lassen sich als Alleinbindemittel in wäßrigen Lacken einsetzen, wobei übliche Pigmente und Lackadditive wie Fließverbesserer, Entschäumer, Konservierungsmittel und Koaleszenzhilfsmittel eingesetzt werden können. Die Lacke lassen sich auf allen genannten Substraten auftragen und bilden nach dem Trocknen Beschichtungen mit guter Beständigkeit und guter Korrosionsschutzwirkung.

Die Herstellung der Harze **ZYWX** kann erfolgen, indem zunächst die Epoxidharze **Z** mit den ungesättigten Carbonsäuren **W** unter Öffnung des Epoxidrings und Bildung eines Hydroxyesters **ZW** umgesetzt werden, wobei die Mengen von **Z** und **W** so gewählt werden, daß noch ein Teil der Epoxidgruppen unreagiert bleibt, und diese Epoxidgruppen-haltigen Hydroxyester **ZW** dann mit den aliphatischen Aminen **Y** zu Carbonsäure-modifizierten Epoxid-Amin-Addukten **ZYW** reagiert werden. Eine andere Möglichkeit ist die Umsetzung der ungesättigten Carbonsäuren **W** mit den Epoxid-Amin-Addukten **ZY,** wobei die Mengen der Reaktanden **Z** und **Y** jetzt so gewählt werden müssen, daß noch unreagierte Epoxidgruppen für die Reaktion mit den ungesättigten Carbonsäuren **W** zur Verfügung stehen. Diese Verbindungen **ZYW** werden dann zumindest teilweise neutralisiert, in die wäßrige Phase überführt und mit weiterem Epoxidharz **X** umgesetzt zu den fettsäuremodifizierten wasserverdünnbaren kationisch stabilisierten Epoxidharzen **ZYWX,** auf die dann in einer weiteren Reaktion äthylenisch ungesättigte Monomere **V** in Gegenwart von radikalbildenden Initiatoren gepfropft werden können. Dabei bilden sich sowohl Propfpolymere **ZYWXV,** in denen die aus den Monomeren **V** gebildeten Polymere mit den Epoxidharzen **ZYWX** chemisch gebunden sind, als auch einfache Mischungen der Emulsionspolymeren aus der Polymerisation von **V** und den in Wasser dispergierten Epoxidharzen **ZYWX.** Es ist auch möglich, die Polymerisation der Monomeren **V** ohne vorherige Modifikation des Epoxidharzes **ZYX** mit ungesättigten Carbonsäuren **W** in Gegenwart von dessen wäßriger Dispersion durchzuführen. In diesem Fall ist der Anteil der auf das Epoxidharz gepfropften Polymeren im allgemeinen geringer.

Die ungesättigten Carbonsäuren **W** sind aliphatische lineare und verzweigte Carbonsäuren mit 3 bis 30 Kohlenstoffatomen, einer Carboxylgruppe und mindestens einer olefinischen Doppelbindung pro Molekül. Geeignet sind Acrylsäure, Methacrylsäure, die Monoalkylester von Malein- und Fumarsäure, Tetrahydrophthalsäure sowie anderen ungesättigten Dicarbonsäuren, bevorzugt werden jedoch ungesättigte Fettsäuren wie Ölsäure, Erucasäure, Linolsäure, Sorbinsäure, Linolensäure, Arachidonsäure sowie die aus natürlichen Ölen erhaltenen Mischungen wie Sonnenblumenölfettsäure, Ricinenfettsäuren, Tallölfettsäure, Sojaölfettsäuren, Saflorölfettsäuren und Leinölfettsäure.

Die Monomeren **V** besitzen mindestens eine olefinische Doppelbindung und können weitere reaktive Gruppen aufweisen, wie Hydroxylgruppen (**V1**) und Epoxidgruppen (**V2**), oder sie (**V3**) enthalten kein weiteren reaktiven Gruppen bzw. nur solche Gruppen, die nicht unter den üblichen Härtungsbedingungen umsetzbar sind. Monomere **V1** mit Hydroxylgruppen sind Hydroxyalkylester, insbesondere Hydroxyäthyl-, 2- und 3-Hydroxypropyl-, 2- und 4-Hydroxybutyl-, 6-Hydroxyhexyl-und 1-Hydroxy-2-propylester, von olefinisch ungesättigten Carbonsäuren, insbesondere von Acryl- und Methacrylsäure, oder von Monoalkylestern von olefinisch ungesättigten Dicarbonsäuren wie z. B. Hydroxyäthylmethylmaleinat. Bevorzugt sind Hydroxyäthyl(meth)acrylat und die kommerziell erhältlichen Mischungen von Hydroxypropyl(meth)acrylaten. Monomere **V2** mit Epoxidgruppen sind insbesondere Glycidylester von olefinisch ungesättigten Carbonsäuren wie Glycidyl(meth)acrylat oder Glycidylmethylmaleinat. Bevorzugt werden Monomere **V3**, die außer der Doppelbindung keine weiteren reaktiven Gruppen aufweisen. Besonders geeignet sind Styrol, die Alkylester von Acryl- und Methacrylsäure wie Methylmethacrylat, Äthyl(meth)acrylat, n-, iso-, sek.- und tert.-Butyl(meth)acrylat, Hexyl(meth)acrylat, 2-Äthylhexyl(meth)acrylat, Vinylester von aliphatischen linearen oder verzweigten Monocarbonsäuren wie Vinylacetat, Vinylpropionat, die Vinylester der Versaticsäuren, Vinylmethyläther, sowie Vinyl- und Vinylidenchlorid, Acrylnitril und Methacrylnitril.

Die so zugänglichen modifizierten Epoxidharz-Dispersionen **ZYWX** (Carbonsäure-modifiziert) und **ZYWXV** (Carbonsäure-modifiziert und Emulsionspolymer-modifiziert) sind als Bindemittel einzusetzen und ergeben Beschichtungen mit hervorragendem Korrosionsschutz.

In den nachfolgenden Beispielen bedeuten ebenso wie im vorhergehenden Text alle Angaben mit der Einheit "%" Massenanteile (Quotient der Masse des betreffenden Stoffes und der Masse der Mischung), soweit nicht anders angegeben. Konzentrationsangaben in "%" sind Massenanteile des gelösten Stoffes in der Lösung (Masse des gelösten Stoffes, dividiert durch die Masse der Lösung).

**Beispiele:**

**Beispiel 1: Epoxidharz-Zwischenprodukt**

1900 g eines Epoxidharzes auf Basis von Bisphenol A mit einem spezifischen Epoxidgruppengehalt von 2,1 mol/kg wurden in Methoxypropanol mit 420 g Tallölfettsäure, 102 g Dimethylaminopropylamin und 53 g Diäthanolamin zu einer 70 %igen Lösung gelöst und bei 110 °C bis zum vollständigen Verbrauch der Epoxidgruppen reagiert. Anschließend wurden 60 mmol Essigsäure auf 100 g des Festharzes zugegeben, und mit voll entsalztem Wasser auf einen Feststoffgehalt von 40 % verdünnt.
Zu dieser wäßrigen Lösung wurde bei 90 °C innerhalb von einer Stunde 250 g Bisphenol A-Diglycidyläther zugegeben und die Mischung wurde unter Rühren gehalten, bis keine Epoxidgruppen mehr nachweisbar waren. Durch weiteren Zusatz von Wasser wurde auf einen Festkörper-Massenanteil von 30 % verdünnt.

**Beispiel2:**

Zu 333 g des Epoxidharz-Zwischenprodukts aus Beispiel 1 wurden 1 g tert.-Butylhydroperoxid zugegeben und diese Mischung auf 70 °C erhitzt. Zu dieser Mischung wurde bei 70 °C während 4 Stunden eine Monomerenmischung bestehend aus 30 g Styrol, 30 g 2-Äthylhexylacrylat, 40 g Methylmethacrylat und 18 g Butylglykol zugegeben. Gleichzeitig wurde eine Lösung von 0,15 g Ascorbinsäure in 35 g voll entsalztem Wasser zugetropft.
Anschließend wurde die Temperatur eine Stunde bei 70 °C gehalten. Danach wurden weitere 0,1 g Ascorbinsäure gelöst in 25 g Wasser zugegeben und das Produkt eine weitere Stunde bei 70 °C gerührt.
Die Analyse ergab folgende Werte

| Gehalt an nichtflüchtigen Anteilen | 39,7% | DIN EN ISO 3251 (1 Stunde, 125 °C) |
|---|---|---|
| Viskosität | 120 mPa·s | DIN EN ISO 3219 (23 °C, 100 s$^{-1}$) |

**Beispiel 3:**

Zu 333 g des Epoxidharz-Zwischenprodukts aus Beispiel 1 wurden 1 g tert.-Butylhydroperoxid zugegeben und diese Mischung auf 70 °C erhitzt. Zu dieser Mischung wurde bei 70 °C während 4 Stunden eine Monomerenmischung bestehend aus 30 g Styrol, 30 g 2-Äthylhexylacrylat, 30 g Methylmethacrylat, 10 g Glycidylmethacrylat und 18 g Butylglykol zugegeben. Gleichzeitig wurde eine Lösung von 0,15 g Ascorbinsäure in 35 g voll entsalztem Wasser zugetropft.

Anschließend wurde Temperatur eine Stunde bei 70 °C gehalten. Danach wurden weitere 0,1 g Ascorbinsäure gelöst in 25 g Wasser zugegeben und das Produkt eine weitere Stunde bei 70 °C gerührt.

Die Analyse ergab folgende Werte

| Gehalt an nichtflüchtigen Anteilen | 39,2% | DIN EN ISO 3251 (1 Stunde, 125 °C) |
|---|---|---|
| Viskosität | 90 mPa·s | DIN EN ISO 3219 (23 °C, 100 s$^{-1}$) |

**Patentansprüche**

1. Wasserverdünnbare kationisch stabilisierte Epoxidharze **ZYWX**, die erhältlich sind durch mehrstufige Umsetzung, wobei Reaktionsprodukte **ZYW** von aromatischen oder aliphatischen Epoxidverbindungen **Z** mit mindestens einer Epoxidgruppe pro Molekül, aliphatischen Aminen **Y**, die mindestens eine primäre oder sekundäre Aminogruppe aufweisen, und ungesättigten Carbonsäuren **W** durch Säurezusatz zumindest teilweise neutralisiert und anschließend in eine wäßrige Dispersion überführt werden und durch Reaktion mit einem Epoxidharz **X** mit mindestens zwei Epoxidgruppen pro Molekül in die Harze **ZYWX** umgewandelt werden, wobei die Mengen des Epoxidharzes **X** und des Epoxid-Amin-Carbonsäure-Adduktes **ZYW** so gewählt werden, daß die Anzahl der (bezüglich der Addition an eine Epoxidgruppe) reaktiven Hydroxyl- und/oder Amino-Gruppen in **ZYW** mindestens gleich der der Epoxidgruppen in **X** ist.

2. Wasserverdünnbare kationisch stabilisierte Epoxidharze **ZYWX** nach Anspruch 1, **dadurch gekennzeichnet, daß** die Amine **Y** ausgewählt sind aus Aminen **Y1** mit mindestens einer primären Aminogruppe und gegebenenfalls einer oder mehreren tertiären Aminogruppen und Aminen **Y2** mit mindestens einer sekundären Aminogruppe und gegebenenfalls einer oder mehreren Hydroxylgruppen.

3. Wasserverdünnbare kationisch stabilisierte Epoxidharze **ZYWX** nach Anspruch 1, **dadurch gekennzeichnet, daß** die Amine **Y** Mischungen sind aus Aminen **Y1** mit mindestens einer primären Aminogruppe und gegebenenfalls einer oder mehreren tertiären Aminogruppen und Aminen **Y2** mit mindestens einer sekundären Aminogruppe und gegebenenfalls einer oder mehreren Hydroxylgruppen.

4. Wasserverdünnbare kationisch stabilisierte Epoxidharze **ZYWX** nach Anspruch 2 oder 3, **dadurch gekennzeichnet, daß** die Epoxidverbindungen **Z** zuerst mit einem Amin **Y2** mit mindestens einer sekundären Aminogruppe und anschließend mit einem Amin **Y1** mit mindestens einer primären Aminogruppe umgesetzt werden.

5. Wasserverdünnbare kationisch stabilisierte Epoxidharze **ZYWX** nach Anspruch 1, **dadurch gekennzeichnet, daß** Epoxidharze **Z** zwei 1,2-Epoxygruppen aufweisen.

6. Wasserverdünnbare kationisch stabilisierte Epoxidharze **ZYWX** nach Anspruch 1, **dadurch gekennzeichnet, daß** die Epoxidharze **Z** abgeleitet sind von Bisphenol A oder Bisphenol F oder deren Mischungen.

7. Wasserverdünnbare kationisch stabilisierte Epoxidharze **ZYWX** nach Anspruch 1, **dadurch gekennzeichnet, daß** die Epoxidharze **X** ausgewählt sind aus Epoxidharzen abgeleitet von Bisphenol A, Bisphenol F, deren Mischungen, sowie Glycidyläthern von mehrwertigen Alkoholen ausgewählt aus Trimethyloläthan, Trimethylolpropan, Pentaerythrit, Ditrimethyloläthan und -propan und Dipentaerythrit sowie deren Äthoxylierungs- und propoxylierungsprodukten.

8. Wasserverdünnbare kationisch stabilisierte Epoxidharze **ZYWX** nach Anspruch 1, **dadurch gekennzeichnet, daß** die Harze Aminzahlen von 40 mg/g bis 150 mg/g und Hydroxylzahlen von 30 mg/g bis 150 mg/g aufweisen, und ihr Staudinger-Index zwischen 30 cm$^3$/g und 100 cm$^3$/g, gemessen in N-Methylpyrrolidon, liegt.

9. Wasserverdünnbare kationisch stabilisierte Epoxidharze **ZYWX** nach Anspruch 1, **dadurch gekennzeichnet, daß** die ungesättigten Carbonsäuren **W** ausgewählt sind aus aliphatischen linearen und verzweigten Carbonsäuren mit 3 bis 30 Kohlenstoffatomen und mindestens einer olefinischen Doppelbindung pro Molekül.

10. Wasserverdünnbare kationisch stabilisierte Epoxidharze **ZYWX** nach Anspruch 1, **dadurch gekennzeichnet, daß** die modifizierten Epoxid-Amin-Addukte **ZYW** Umsetzungsprodukte von aliphatischen Aminen **Y** mit Umsetzungsprodukten **ZW** von Epoxidverbindungen **Z** mit olefinisch ungesättigten Carbonsäuren **W** umfassen.

**11.** Wasserverdünnbare kationisch stabilisierte Epoxidharze **ZYWX** nach Anspruch 1, **dadurch gekennzeichnet, daß** die modifizierten Epoxid-Amin-Addukte **ZYW** Umsetzungsprodukte von olefinisch ungesättigten Carbonsäuren **W** mit Epoxid-Amin-Addukten **ZY** von Epoxidverbindungen **Z** mit aliphatischen Aminen **Y** umfassen.

**12.** Wasserverdünnbare kationisch stabilisierte Epoxidharze, **dadurch gekennzeichnet, daß** in Gegenwart von Epoxidharzen **ZYWX** nach Anspruch 1 eine Polymerisationsreaktion im wäßrigen Medium durchgeführt wird, wobei äthylenisch ungesättigte Monomere **V** ausgewählt aus Hydroxylgruppen-haltigen Monomeren **V1**, Epoxidgruppen-haltigen Monomeren **V2** und ungesättigten Monomeren **V3,** die keine der vorgenannten reaktiven Gruppen zusätzlich enthalten, ausgelöst durch einen Radikalinitiator polymerisiert werden.

**13.** Verfahren zur Herstellung von wasserverdünnbaren kationisch stabilisierten Epoxidharzen **ZYWX, dadurch gekennzeichnet, daß** in einer ersten Stufe aromatische oder aliphatische Epoxidverbindungen **Z** mit aliphatischen Aminen **Y,** ausgewählt aus Aminen **Y1** mit mindestens einer primären Aminogruppe und Aminen **Y2** mit mindestens einer sekundären Aminogruppe, umgesetzt werden zu einem Epoxid-Amin-Addukt **ZY**, dieses mit einer olefinisch ungesättigten Carbonsäure **W** zu einem Epoxid-Amin-Carbonsäure-Addukt **ZYW** ungesetzt wird, wobei dieses anschließend durch Säurezusatz zumindest teilweise neutralisiert und in eine wäßrige Dispersion überführt wird, und anschließend in einer zweiten Stufe mit einer Egoxidverbiadung **X** umgesetzt wird, wobei die Menge an X so bemessen ist, daß die Anzahl der bezüglich der Addition an einen Epoxidgruppe reaktiven Hydroxyl- und/oder Aminogruppen in **ZYW** um mindestens 10 % größer ist als die Zahl der Epoxidgruppen in **X**, und daß die Umsetzung von **ZYW** und **X** so lange vorgenommen wird, bis keine Epoxidgruppen mehr in der Reaktionsmischung nachweisbar sind.

**14.** Verfahren zur Herstellung von wasserverdünnbaren kationisch stabilisierten Epoxidharzen **ZYWX**, **dadurch gekennzeichnet, daß** in einer ersten Stufe aromatische oder aliphatische Epoxidverbindungen **Z** mit einer olefinisch ungesättigten Carbonsäure **W** zu einem Epoxid-Carbonsäure-Addukt **ZW** umgesetzt werden, dieses mit aliphatischen Aminen **Y**, ausgewählt aus Aminen **Y1** mit mindestens einer primären Aminogruppe und Aminen **Y2** mit mindestens einer sekundären Aminogruppe zu einem Epoxid-Amin-Carbonsäure-Addukt **ZYW** ungesetzt wird, wobei dieses anschließend durch Säurezusatz zumindest teilweise neutralisiert und in eine wäßrige Dispersion überführt wird, und anschließend in einer zweiten Stufe mit einer Epoxidverbindung **X** umgesetzt wird, wobei die Menge an **X** so bemessen ist, daß die Anzahl der bezüglich der Addition an einen Epoxidgruppe reaktiven Hydroxyl- und/oder Aminogruppen in **ZYW** um mindestens 10 % größer ist als die Zahl der Epoxidgruppen in **X**, und daß die Umsetzung von **ZYW** und **X** so lange vorgenommen wird, bis keine Epoxidgruppen mehr in der Reaktionsmischung nachweisbar sind.

**15.** Verfahren zur Herstellung von wasserverdünnbaren kationisch stabilisierten Epoxidharzen gemäß Anspruch 12, **dadurch gekennzeichnet, daß** eine durch radikalische Initiatoren ausgelöste Emulsionspolymerisation von äthylenisch ungesättigten Monomeren **V** in Gegenwart der wäßrigen Dispersion der Epoxidharze **ZYWX** anschließend an deren Herstellung vorgenommen wird.

**16.** Wäßrige Lacke, enthaltend wasserverdünnbare kationisch stabilisierte Epoxidharze **ZYWX** nach Anspruch 1 als Bindemittel.

**17.** Wäßrige Lacke, enthaltend wasserverdünnbare kationisch stabilisierte Epoxidharze gemäß Anspruch 12 als Bindemittel.

## Claims

**1.** A water-dilutable, cationically stabilized epoxy resin **ZYWX** obtainable by multistage reaction, reaction products **ZYW** of aromatic or aliphatic epoxide compounds **Z** containing at least one epoxide group per molecule, aliphatic amines **Y** containing at least one primary or secondary amino group and unsaturated carboxylic acids **W** being at least partly neutralized by addition of acid and being then converted into an aqueous dispersion and by reaction with an epoxy resin **X** containing at least two epoxide groups per molecule being converted into the resins **ZYWX,** the amounts of the epoxy resin **X** and of the epoxide-amine-carboxylic acid adduct **ZYW** being chosen such that the number of reactive (in respect of addition reaction with an epoxide group) hydroxyl and/or amino groups in **ZYW** is at least equal to that of the epoxide groups in **X**.

**2.** The water-dilutable, cationically stabilized epoxy resin **ZYWX** of claim 1, wherein the amines **Y** are selected from amines **Y1** containing at least one primary amino group and, if desired, one or more tertiary amino groups and amines **Y2** containing at least one secondary amino group and, if desired, one or more hydroxyl groups.

3. The water-dilutable, cationically stabilized epoxy resin **ZYWX** of claim 1, wherein the amines **Y** are mixtures of amines **Y1** containing at least one primary amino group and, if desired, one or more tertiary amino groups and amines **Y2** containing at least one secondary amino group and, if desired, one or more hydroxyl groups.

4. The water-dilutable, cationically stabilized epoxy resin **ZYWX** of claim 2 or 3, wherein the epoxide compounds **Z** are first reacted with an amine **Y2** containing at least one secondary amino group and then reacted with an amine **Y1** containing at least one primary amino group.

5. The water-dilutable, cationically stabilized epoxy resin **ZYWX** of claim 1, wherein epoxy resins **Z** contain two 1,2-epoxy groups.

6. The water-dilutable, cationically stabilized epoxy resin **ZYWX** of claim 1, wherein the epoxy resins **Z** are derived from bisphenol A or bisphenol F or mixtures thereof.

7. The water-dilutable, cationically stabilized epoxy resin **ZYWX** of claim 1, wherein the epoxy resins **X** are selected from epoxy resins derived from bisphenol A, bisphenol F, mixtures thereof, and also glycidyl ethers of polyhydric alcohols selected from trimethylolethane, trimethylolpropane, pentaerythritol, ditrimethylolethane and -propane and dipentaerythritol and also their ethoxylation and propoxylation products.

8. The water-dilutable, cationically stabilized epoxy resin **ZYWX** of claim 1, wherein the resin has amine numbers of from 40 to 150 mg/g and hydroxyl numbers of from 30 to 150 mg/g and its Staudinger index is between 30 and 100 cm$^3$/g (measured in N-methylpyrrolidone).

9. The water-dilutable, cationically stabilized epoxy resin **ZYWX** of claim 1, wherein the unsaturated carboxylic acids **W** are selected from aliphatic linear and branched carboxylic acids having 3 to 30 carbon atoms and at least one olefinic double bond per molecule.

10. The water-dilutable, cationically stabilized epoxy resin **ZYWX** of claim 1, wherein the modified epoxide-amine adducts **ZYW** comprise reaction products of aliphatic amines **Y** with reaction products **ZW** of epoxide compounds **Z** with olefinically unsaturated carboxylic acids **W**.

11. The water-dilutable, cationically stabilized epoxy resin **ZYWX** of claim 1, wherein the modified epoxide-amine adducts **ZYW** comprise reaction products of olefinically unsaturated carboxylic acids **W** with epoxide-amine adductz **ZY** of epoxide compounds **Z** with aliphatic amines **Y.**

12. A water-dilutable, cationically stabilized epoxy resin, wherein in the presence of an epoxy resin **ZYWX** of claim 1 a polymerization reaction is carried out in an aqueous medium, ethylenically unsaturated monomers **V** selected from hydroxyl-containing monomers **V1**, epoxy-functional monomers **V2** and unsaturated monomers **V3** additionally containing none of the aforementioned reactive groups being polymerized under initiation by a free-radical initiator.

13. A process for preparing water-dilutable, cationically stabilized epoxy resins **ZYWX**, which comprises in a first stage reacting aromatic or aliphatic epoxide compounds **Z** with aliphatic amines **Y** selected from amines **Y1** containing at least one primary amino group and amines **Y2** containing at least one secondary amino group to give an epoxide-amine adduct ZY, reacting said adduct with an olefinically unsaturated carboxylic acid **W** to give an epoxide-amine-carboxylic acid adduct **ZYW**, said adduct then at least partly being neutralized by addition of acid and being converted into an aqueous dispersion, and then in a second stage carrying out reaction with an epoxide compound **X,** the amount of **X** being such that the number of hydroxyl and/or amino groups in **ZYW** which are reactive in respect of addition reaction with an epoxide group in **ZY** is at least 10 % greater than the number of the epoxide groups in **X,** and which comprises performing the reaction of **ZYW** and **X** until epoxide groups are no longer detectable in the reaction mixture.

14. A process for preparing water-dilutable, cationically stabilized epoxy resins **ZYWX,** which comprises in a first stage reacting aromatic or aliphatic epoxide compounds **Z** with an olefinically unsaturated carboxylic acid **W** to give an epoxide-carboxylic acid adduct **ZW,** then reacting said adduct with aliphatic amines **Y** selected from amines **Y1** containing at least one primary amino group and amines **Y2** containing at least one secondary amino group to give an epoxide-amine-carboxylic acid adduct **ZYW**, said adduct then being at least partly neutralized by addition of acid and converted into an aqueous dispersion, and then in a second stage being reacted with an epoxide compound **X**, the amount of **X** being such that the number of hydroxyl and/or amino groups in **ZYW** which are reactive in respect of addition reaction with an epoxide group is at least 10 % greater than the number of the epoxide groups in **X**, and which comprises performing the reaction of **ZYW** and **X** until epoxide groups are no longer detectable in the reaction mixture.

15. The process for preparing water-dilutable, cationically stabilized epoxy resins of claim 12, wherein an emulsion polymerization initiated by free-radical initiators is performed on ethylenically unsaturated monomers **V** in the presence of the aqueous dispersion of the epoxy resins **ZYWX** subsequent to their preparation.

16. An aqueous coating material comprising the water-dilutable, cationically stabilized epoxy resin **ZYWX** of claim 1 as binder.

17. An aqueous coating material comprising the water-dilutable, cationically stabilized epoxy resin of claim 12 as binder.

## Revendications

1. Résines époxydes diluables à l'eau, à stabilisation cationique ZYWX, pouvant être obtenues par une réaction en plusieurs étapes, dans laquelle les produits ZYW de la réaction de composés époxydes aromatiques ou aliphatiques Z ayant au moins un groupe époxy par molécule, d'amines aliphatiques Y qui comportent au moins un groupe amino primaire ou secondaire, et d'acides carboxyliques insaturés W, sont au moins partiellement neutralisés par addition d'un acide puis sont convertis en une dispersion aqueuse, et, par réaction avec une résine époxyde X comportant au moins deux groupes époxy par molécule, sont convertis en les résines ZYWX, les quantités de la résine époxyde X et de l'adduit époxyde-amine-acide carboxylique ZYW étant choisies de façon que le nombre des groupes hydroxyle et/ou amino réactifs (pour ce qui concerne l'addition à un groupe époxy) dans ZYW soit au moins égal à celui des groupes époxy de X.

2. Résines époxydes diluables à l'eau, à stabilisation cationique ZYWX selon la revendication 1, **caractérisées en ce que** les amines Y sont choisies parmi les amines Y1 ayant au moins un groupe amino primaire et éventuellement un ou plusieurs groupes amino tertiaires, et les amines Y2 ayant au moins un groupe amino secondaire et éventuellement un ou plusieurs groupes hydroxyle.

3. Résines époxydes diluables à l'eau, à stabilisation cationique ZYWX selon la revendication 1, **caractérisées en ce que** les amines Y sont des mélanges d'amines Y1 ayant au moins un groupe amino primaire et éventuellement un ou plusieurs groupes amino tertiaires, et d'amines Y2 ayant au moins un groupe amino secondaire et éventuellement un ou plusieurs groupes hydroxyle.

4. Résines époxydes diluables à l'eau, à stabilisation cationique ZYWX selon la revendication 2 ou 3, **caractérisées en ce que** les composés époxydes Z sont d'abord mis à réagir avec une amine Y2 ayant au moins un groupe amino secondaire puis avec une amine Y1 ayant au moins un groupe amino primaire.

5. Résines époxydes diluables à l'eau, à stabilisation cationique ZYWX selon la revendication 1, **caractérisées en ce que** les résines époxydes Z comportent deux groupes 1,2-6-poxy.

6. Résines époxydes diluables à l'eau, à stabilisation cationique ZYWX selon la revendication 1, **caractérisées en ce que** les résines époxydes Z dérivent du bisphénol A ou du bisphénol F ou des mélanges de ceux-ci.

7. Résines époxydes diluables à l'eau, à stabilisation cationique ZYWX selon la revendication 1, **caractérisées en ce que** les résines époxydes X sont choisies parmi les résines époxydes qui dérivent du bisphénol A, du bisphénol F, de leurs mélanges, ainsi que les éthers glycidyliques de polyalcools, choisis parmi le triméthyloléthane, le triméthylolpropane, le pentaérythritol, le ditriméthylol-éthane et le ditriméthylolpropane et le dipentaérythritol, ainsi que leurs produits d'éthoxylation et de propoxylation.

8. Résines époxydes diluables à l'eau, à stabilisation cationique ZYWX selon la revendication 1, **caractérisées en**

**ce que** les résines on un indice d'amine de 40 mg/g à 150 mg/g et un indice d'hydroxyle de 30 mg/g à 150 mg/g, et que leur indice de Staudinger est compris entre 30 cm$^3$/g et 100 cm$^3$/g, mesuré dans la N-méthylpyrrolidone.

9.  Résines époxydes diluables à l'eau, à stabilisation cationique ZYWX selon la revendication 1, **caractérisées en ce que** les acides carboxyliques insaturés W sont choisis parmi les acides carboxyliques aliphatiques à chaîne droite et ramifiée ayant 3 à 30 atomes de carbone et comportant au moins une double liaison oléfinique par molécule.

10. Résines époxydes diluables à l'eau, à stabilisation cationique ZYWX selon la revendication 1, **caractérisées en ce que** les adduits époxyde-amine modifiés ZYW comprennent les produits de la réaction d'amines aliphatiques Y avec des produits ZW de la réaction de composés époxydes Z avec des acides carboxyliques à insaturation oléfinique W.

11. Résines époxydes diluables à l'eau, à stabilisation cationique ZYWX selon la revendication 1, **caractérisées en ce que** les adduits époxyde-amine modifiés ZYW sont des produits de la réaction d'acides carboxyliques à insaturation oléfinique W avec des adduits époxyde-amine ZY de composés époxydes Z et d'amines aliphatiques Y.

12. Résines époxydes diluables à l'eau, à stabilisation cationique, **caractérisées en ce que**, en présence de résines époxydes ZYWX selon la revendication 1, on met en oeuvre une réaction de polymérisation en milieu aqueux, réaction au cours de laquelle des monomères à insaturation éthylénique V, choisis parmi les monomères V1 contenant des groupes hydroxyle, les monomères V2 contenant des groupes époxy et les monomères insaturés V3, qui ne contiennent en outre aucun des groupes réactifs mentionnés ci-dessus, subissent une polymérisation déclenchée par un amorceur radicalaire.

13. Procédé de préparation de résines époxydes diluables à l'eau à stabilisation cationique ZYWX, **caractérisé en ce que**, dans une première étape, on fait réagir des composés époxydes aromatiques ou aliphatiques Z avec des amines aliphatiques Y choisies parmi les amines Y1 ayant au moins un groupe amino primaire et les amines Y2 ayant au moins un groupe amino secondaire, pour obtenir un adduit époxyde-amine ZY, on fait réagir ce dernier avec un acide carboxylique à insaturation oléfinique W pour obtenir un adduit époxyde-amine-acide carboxylique ZYW, ce dernier étant ensuite, par addition d'un acide, au moins partiellement neutralisé et converti en une dispersion aqueuse, puis, dans une deuxième étape, est mis à réagir avec un composé époxyde X, la quantité de X étant définie de telle sorte que le nombre des groupes hydroxyle et/ou amino de ZYW, réactifs vis-à-vis de l'addition à un groupe époxy, soit d'au moins 10 % plus grand que le nombre des groupes époxy de X, et que la réaction de ZYW et de X soit mise en oeuvre jusqu'à ce qu'aucun groupe êpoxy ne puisse être décelé dans le mélange réactionnel.

14. Procédé de préparation de résines époxydes diluables à l'eau à stabilisation cationique ZYWX, **caractérisé en ce que**, dans une première étape, on fait réagir des composés époxydes aromatiques ou aliphatiques Z avec un acide carboxylique à insaturation oléfinique W pour obtenir un adduit époxyde-acide carboxylique ZW, on fait réagir ce dernier avec des amines aliphatiques Y choisies parmi les amines Y1 ayant au moins un groupe amino primaire et les amines Y2 ayant au moins un groupe amino secondaire, pour obtenir un adduit époxyde-amine-acide carboxylique ZYW, ce dernier étant ensuite au moins partiellement neutralisé par addition d'un acide et étant converti en une dispersion aqueuse, et étant dans une deuxième étape mis à réagir avec un composé époxyde X, la quantité de X étant déterminée de telle sorte que le nombre des groupes hydroxyle et/ou amino de ZYW, réactifs vis-à-vis de l'addition à un groupe époxy, soit d'au moins 1.0 % plus grand que le nombre des groupes époxy de X, et que la réaction de ZYW et de X soit mise en oeuvre jusqu'à ce qu'aucun groupe époxy ne soit plus décelable dans le mélange réactionnel.

15. Procédé de préparation de résines époxydes diluables à l'eau à stabilisation cationique selon la revendication 12, **caractérisé en ce qu'**on procède à une polymérisation en émulsion, déclenchée par des amorceurs radicalaires, de monomères à insaturation éthylénique V en présence de la dispersion aqueuse des résines époxydes ZYWX, et ce, après leur préparation.

16. Peintures aqueuses contenant en tant que liant des résines époxydes diluables à l'eau à stabilisation cationique ZYWX selon la revendication 1.

17. Peintures aqueuses contenant en tant que liant des résines époxydes diluables à l'eau à stabilisation cationique selon la revendication 12.